# EUROPEAN PATENT SPECIFICATION

(11) **EP 1 363 030 B1**
(45) Date of publication and mention of the grant of the patent: **21.12.2005**
(21) Application number: 03010183.6
(22) Date of filing: 06.05.2003
(51) Int. Cl.: F16B 5/02, F16B 41/00, B25B 23/04, F16B 27/00

(54) **Holder for a securing element**
Halter für ein Befestigungselement
Support d'élément de fixation

(30) Priority: 15.05.2002 DE 20207685 U
(43) Date of publication of application: 19.11.2003
(73) Proprietor: Tyco Electronics AMP GmbH, 64625 Bensheim (DE)
(72) Inventor: Vu, Dinh Hung, 65197 Wiesbaden (DE); Listing, Martin, 63225 Langen (DE)
(74) Representative: Grünecker, Kinkeldey, Stockmair & Schwanhäusser Anwaltssozietät

(56) References cited:
- US-A- 4 106 618
- US-A- 4 106 619
- US-A- 4 684 022
- US-A- 4 881 643

## Description

The invention relates to a holder for a securing element.

US 4,686,022 A discloses a fastener strip formed by an elongated flexible web having one or two rows of tabs projecting from one or both of the longitudinal edges of the web. The fasteners have an elongated shaft and a head. The outer free end of each of the tabs is provided with a holding means comprising a generally circular opening for receiving the body of the fastener such as a shank portion of the nail. A pair of inclined edges lead into the circular openings to facilitate insertion of the fasteners in the holding means. In another embodiment, the transversely extending tabs are provided with a fastener retaining means adapted for use with cap screws. The holding means utilize a bifurcation or slot extending lengthwise through the tab and having an outwardly flared cup defining structure for receiving the head of the fastener and an opening through which the shank or body of the fastener extends.

Holders for a securing element having a substantially elongated shaft and a head, such as a screw, are commonly used, for example, with back-up fuse boxes and relay boxes. In one example, the securing element is pressed by means of the head into a receiving part of the holder and held thereby. In another example, the securing element is secured to the holder by injection moulding plastics material around the securing element.

A disadvantage with the first example is that the securing element may become loose and fall out of the holder when external forces are applied thereto. Still further, the securing element is not secured against tilting. A disadvantage with the second method is that the securing element cannot be replaced if the head is completely surrounded by injection moulded plastics material without breaking the plastics material. Moreover, injection moulding is complicated and if the injection moulding around the head is only lateral, the securing element may become loose and fall out of the holder.

It is, therefore, an object of the invention to provide a holder that is easy to manufacture and receives a securing element having a shaft and a head wherein the securing element is securely held in the holder and may be easily inserted and removed from the holder.

The above and other objects of the invention are achieved by a holder according to claim 1. Preferred embodiments are claimed in the dependent claims.

The invention will be described in greater detail hereafter with reference to the drawings, in which:
Fig. 1 is a perspective view of a holder with the screw inserted therein,
Fig. 2 is a perspective view of the holder and the screw of Fig. 1 when the screw is not inserted into the holder,
Fig. 3 is a diagrammatic side plan view of the holder with the screw inserted therein, and
Fig. 4 is a diagrammatic top plan view of the holder with the screw inserted therein.

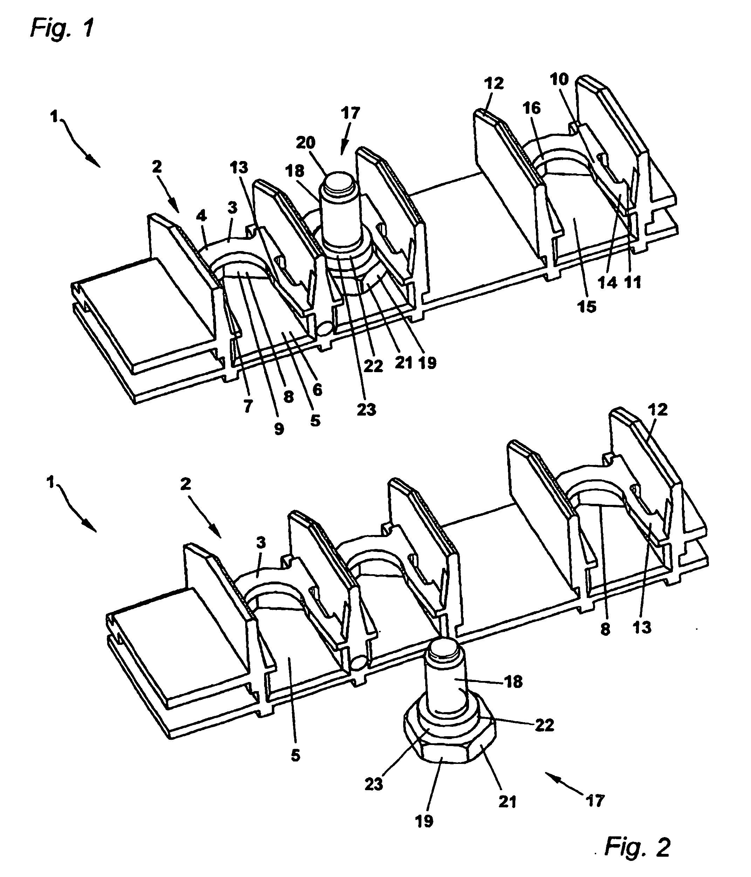

Figure 1 shows a screw 17 and an insulated holder 1. The holder 1 is formed from a resilient material, such as plastic, and has a plurality of receiving parts 2 connected to each other by longitudinal sides 11. Each receiving part 2 is separated by partition walls 12 to prevent short circuits therebetween.

As shown in Figures 1 and 2, the receiving part 2 includes a holding portion 3 formed by a wall portion of the holder 1. A supporting part 5 also formed by a wall portion of the holder 1 is constructed as a head abutment surface 6. The abutment surface 6 runs substantially parallel to the holding portion 3. The abutment surface 6 and the holding portion 3 are connected to one another to form a pocket 7. Between the supporting part 5 and the holding portion 3 is a rear wall 8 with abutment surface portions 9. The rear wall 8 prevents twisting. Guide portions 13 are connected to the partition wall 12 by connecting portions 14. The guide portions 13 converge towards one another in a screw receiving direction to form a narrowed part 15 that has a resilient portion 10. The guide portions 13 merge to a portion 16 of the holding portion to form a circular region 16 that forms a screw retaining part 4.

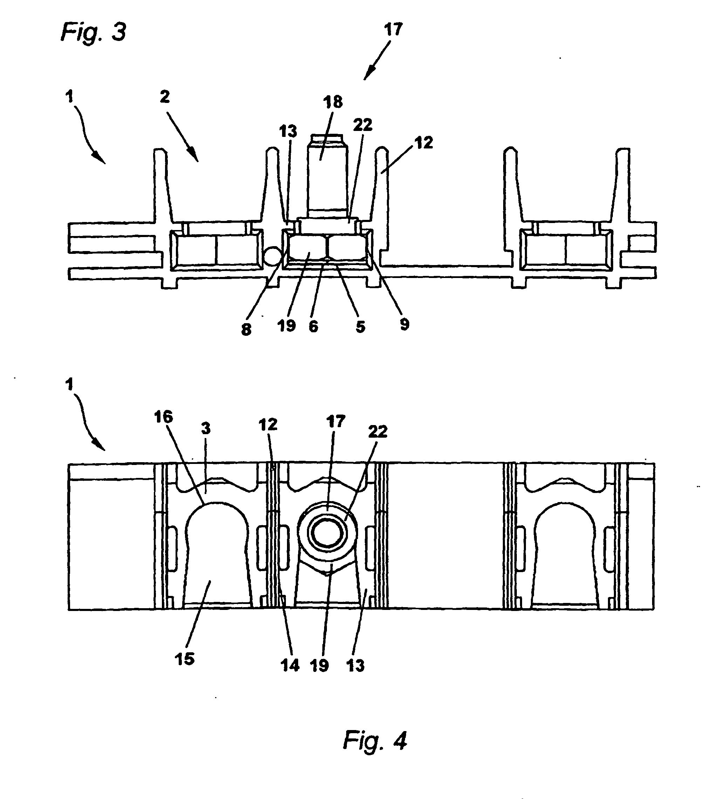

As best shown in Figure 2, the screw 17 has an elongated shaft 18 and a head 19. The shaft 18 is provided with an external thread 20, shown in Figure 1. The head 19 extends radially with respect to the shaft 18 and has abutment surfaces 21 that abut the rear wall 8. The head 19 is shown as being hexagonal in shape, however, it is sufficient if the head is polygonal in construction. As best shown in Figure 3, a holding ring 22 is adjacent to the head 19. The holding ring 22 supports the screw in the holding portion 3 and has adhesive surfaces 23 that extend in a longitudinal direction of the shaft 18 of the screw 17 by an amount similar to the holding portion 3.

The positioning of the screw 17 in the holder 1 will now be described in greater detail with reference to Figures 3 and 4. As shown in Figure 3, the screw 17 is inserted into the receiving part 2 of the holder 1 such that the head 19 abuts the abutment surface 6 of the supporting part 5. The holding ring 22 of the screw 17 is received between the guide portions 13 until the screw 17 reaches the narrowed part 15 wherein the spacing between the guide portions 13 is slightly smaller than the diameter of the holding ring 22. Alternatively, a screw without a holding ring 22 may be received by the receiving part 2, in which case, the spacing between the guide portions 13 is slightly smaller than the diameter of the shaft 18. At this point, pressure on the screw 17 is increased so that the screw 17 is pressed through the narrowed part 15 and is received by the circular holding portion 16 of the retaining part 4. The holder 1 being made of the resilient material facilitates latching the screw 17 therein. Because the diameter of the holding portion 16 is slightly smaller than the diameter of the holding ring 22 or, in the case of a screw without a holding ring 22, of the shaft 18, the screw 17 is clamped in place. In this way, optimal securing of the screw 17 is achieved.

In the latched position, the head 19 of the screw 17 is arranged between the holding portion 3 and the supporting part 5 and in the pocket 7. The shaft 18 extends on a side of the holding portion 3 opposite the supporting part 5, with the holding portion 3 and the retaining part 4 positioned against the adhesive surfaces 23 of the holding ring 22. Alternatively, in the case of a screw without a holding ring 22, the holding portion 3 and the retaining part 4 are positioned against the shaft 18. An arrangement of this kind assures that the screw 17 is prevented from tilting. Further, since the receiving part 2 has a rear wall 8 with abutment surface portions 9, and the head 19 has the abutment surfaces 21 which abut the abutment surface portions 9 when the screw 17 is inserted, there is a form-fitting connection between the rear wall 8 and the head 19 to effectively prevent twisting. This prevention is intensified further if the head 19 is hexagonal in shape.

It is easy to insert, remove, and replace the screw 17 in the holder 1, because it is only necessary to apply sufficient pressure on the screw 17 in opposition to the screw receiving direction for the resilient guide portions 13 to resile and the screw 17 to be received between the narrowed parts 15. Further, the holder 1 reliably secures the screw 17, because the screw 17 is secured perpendicular to the shaft 18 and at the same time is supported against the supporting part 5 in an axial direction of the shaft 18. Moreover, the holder 1 has a plurality of receiving parts 2 such that it is possible to secure a plurality of cables to the holder 1 at the same time, for example using nuts, such that the holder 1 may be used universally. Additionally, as a result of using plastic materials to manufacture the holder 1, the holder is protected from corrosion.

## Claims

1. A holder (1) for a securing element (17) having an elongated shaft (18) and a head (19), the holder (1) comprising:
a receiving part (2) having a holding portion (3) for receiving the shaft (18);
a retaining part (4) and a supporting part (5) for receiving the head (19) therebetween, the retaining part (4) being formed to secure the securing element (17) transversely with respect to the longitudinal axis of the shaft (18), and the supporting part (5) being formed to support the securing element (17) in an axial direction of the shaft (18);
resilient guide portions (13) that converge such that spacing between the guide portions (13) is smaller than a diameter of the shaft (18), the guide portions (13) being formed such that the guide portions (13) resile to allow the shaft (18) to pass through the guide portions (13) and into the receiving part (2); and
a rear wall (8) that extends between the receiving part (2) and the supporting part (5) that forms a pocket (7) for receiving the head (19).

2. The holder (1) of claim 1, wherein the holding portion (3) is positioned such that the shaft (18) is inserted into the holding portion (3) transversely with respect to the longitudinal axis of the shaft (18).

3. The holder (1) of at least one of the preceding claims, wherein the holder (1) is made from a resilient plastic material.

4. The holder (1) of at least one of the preceding claims, further comprising partition walls (12) positioned on sides of the receiving part (2) to prevent short circuiting between adjacent receiving parts (2).

5. The holder (1) of at least one of the preceding claims, wherein the receiving part (2) is formed from a top wall of the holder (1).

6. The holder (1) of claim 1, wherein the rear wall (8) has abutment surfaces (9) formed to correspond to the head (19) of the securing element (17) to prevent the head (19) from twisting.

7. The holder (1) of claim 6, wherein the head (19) is polygonal in shape.

8. The holder (19 of claim 7, wherein the head (19) is hexagonal in shape.

9. The holder (1) of at least one of the preceding claims, wherein the holding portion (3) supports a holding ring (22) on the securing element (17).

10. The holder (1) of at least one of the preceding claims, further comprising adhesive (23) that secures the head (19) to the retaining part (4).

11. The holder (1) of claim 10, wherein the adhesive (23) extends in the longitudinal direction with respect to the shaft (18).

12. The holder (1) of at least one of the preceding claims, wherein the supporting part (5) and the receiving part (2) are parallel to each other.

13. The holder (1) of claim 1, wherein the guide portions (13) merge into the holding portion (3).

14. The holder (1) of at least one of the preceding claims, wherein the securing element (17) is a screw and the shaft (18) has an external thread (20).

15. The holder (1) of at least one of the preceding claims, wherein the supporting part (5) is formed from a bottom wall of the holder (1).

## Patentansprüche

1. Halter (1) für ein Befestigungselement (17) mit einem länglichen Schaft (18) und einem Kopf (19), wobei der Halter (1) aufweist:
ein Aufnahmeteil (2) mit einem Halteabschnitt (3) für das Aufnehmen des Schafts (18);
ein Halteteil (4) und ein Auflageteil (5) für das Aufnehmen des Kopfes (19) dazwischen, wobei das Halteteil (4) so ausgebildet ist, daß es das Befestigungselement (17) quer mit Bezugnahme auf die Längsachse des Schafts (18) sichert, und wobei das Auflageteil (5) so ausgebildet ist, daß es das Befestigungselement (17) in einer axialen Richtung des Schafts (18) aufnimmt;
elastische Führungsabschnitte (13), die so konvergieren, daß der Abstand zwischen den Führungsabschnitten (13) kleiner ist als der Durchmesser des Schafts (18), wobei die Führungsabschnitte (13) so ausgebildet sind, daß die Führungsabschnitte (13) zurückfedern, so daß der Schaft (18) durch die Führungsabschnitte (13) und in das Aufnahmeteil (2) gelangen kann; und
eine hintere Wand (8), die sich zwischen dem Aufnahmeteil (2) und dem Auflageteil (5) erstreckt, welches eine Aussparung (7) für das Aufnehmen des Kopfes (19) bildet.

2. Halter (1) nach Anspruch 1, bei dem der Halteabschnitt (3) so positioniert ist, daß der Schaft (18) in den Halteabschnitt (3) quer mit Bezugnahme auf die Längsachse des Schafts (18) eingesetzt wird.

3. Halter (1) nach mindestens einem der vorhergehenden Ansprüche, wobei der Halter (1) aus einem elastischen Kunststoffmaterial hergestellt wird.

4. Halter (1) nach mindestens einem der vorhergehenden Ansprüche, der außerdem Trennwände (12) aufweist, die auf den Seiten des Aufnahmeteils (2) positioniert sind, um einen Kurzschluß zwischen benachbarten Aufnahmeteilen (2) zu verhindern.

5. Halter (1) nach mindestens einem der vorhergehenden Ansprüche, bei dem das Aufnahmeteil (2) aus einer oberen Wand des Halters (1) gebildet wird.

6. Halter (1) nach Anspruch 1, bei dem die hintere Wand (8) Widerlagerflächen (9) aufweist, die so ausgebildet sind, daß sie dem Kopf (19) des Befestigungselementes (17) entsprechen, um ein Verdrehen des Kopfes (19) zu verhindern.

7. Halter (1) nach Anspruch 6, bei dem der Kopf (19) eine vieleckige Form aufweist.

8. Halter (1) nach Anspruch 7, bei dem der Kopf eine sechseckige Form aufweist.

9. Halter (1) nach mindestens einem der vorhergehenden Ansprüche, bei dem der Halteabschnitt (3) einen Haltering (22) am Befestigungselement (17) trägt.

10. Halter (1) nach mindestens einem der vorhergehenden Ansprüche, der außerdem einen Klebstoff (23) aufweist, der den Kopf (19) am Halteteil (4) sichert.

11. Halter (1) nach Anspruch 10, bei dem sich der Klebstoff (23) in der Längsrichtung mit Bezugnahme auf den Schaft (18) erstreckt.

12. Halter (1) nach mindestens einem der vorhergehenden Ansprüche, bei dem das Auflageteil (5) und das Aufnahmeteil (2) parallel zueinander sind.

13. Halter (1) nach Anspruch 1, bei dem die Führungsabschnitte (13) in den Halteabschnitt (3) übergehen.

14. Halter (1) nach mindestens einem der vorhergehenden Ansprüche, bei dem das Befestigungselement (17) eine Schraube ist und der Schaft (18) ein Außengewinde (20) aufweist.

15. Halter (1) nach mindestens einem der vorhergehenden Ansprüche, bei dem das Auflageteil (5) aus einer unteren Wand des Halters (1) gebildet wird.

## Revendications

1. Support (1) pour élément de fixation (17) constitué d'un arbre allongé (18) et d'une tête (19), le support (1) comprenant:
une partie de réception (2) comprenant une partie de maintien (3) pour recevoir l'arbre (18);
une partie de retenue (4) et une partie de support (5) pour recevoir la tête (19) entre celles-ci, la partie de retenue (4) étant formée pour fixer l'élément de fixation (17) transversalement par rapport à l'axe longitudinal de l'arbre (18), et la partie de support (5) étant formée pour supporter l'élément de fixation (17) dans la direction axiale de l'arbre (18);
des parties de guidage élastiques (13) qui convergent de sorte que l'espacement entre les parties de guidage (13) est plus petit que le diamètre de l'arbre (18), les parties de guidage (13) étant formées de sorte que les parties de guidage (13) se déforment élastiquement pour permettre à l'arbre (18) de passer à travers les parties de guidage (13) et d'entrer dans la partie de réception (2); et
une paroi arrière (8) qui s'étend entre la partie de réception (2) et la partie de support (5) qui forme une poche (7) pour recevoir la tête (19).

2. Support (1) de la revendication 1, dans lequel la partie de maintien (3) est positionnée de sorte que l'arbre (18) s'insère dans la partie de maintien (3) transversalement par rapport à l'axe longitudinal de l'arbre (18).

3. Support (1) selon au moins une des revendications précédentes, dans lequel le support (1) est constitué d'un matériau en plastique élastique.

4. Support (1) selon au moins une des revendications précédentes, comprenant en outre des parois de séparation (12) positionnées sur les côtés de la partie de réception (2) pour empêcher les courts-circuits entre les parties de réception adjacentes (2).

5. Support (1) selon au moins une des revendications précédentes, dans lequel la partie de réception (2) est formée d'une paroi supérieure du support (1).

6. Support (1) de la revendication 1, dans lequel la paroi arrière (8) possède des surfaces de butée (9) formées pour correspondre à la tête (19) de l'élément de fixation (17) pour empêcher la tête (19) de tourner.

7. Support (1) de la revendication 6, dans lequel la tête (19) est de forme polygonale.

8. Support (1) de la revendication 7, dans lequel la tête (19) est de forme hexagonale.

9. Support (1) selon au moins une des revendications précédentes, dans lequel la partie de maintien (3) supporte une rondelle de maintien (22) sur l'élément de fixation (17).

10. Support (1) selon au moins une des revendications précédentes, comprenant en outre un adhésif (23) qui fixe la tête (19) à la partie de retenue (4).

11. Support (1) de la revendication 10, dans lequel l'adhésif (23) s'étend dans la direction longitudinale par rapport à l'arbre (18).

12. Support (1) selon au moins une des revendications précédentes, dans lequel la partie de support (5) et la partie de réception (2) sont parallèles l'une à l'autre.

13. Support (1) de la revendication 1, dans lequel les parties de guidage (13) s'unissent avec la partie de maintien (3).

14. Support (1) selon au moins une des revendications précédentes, dans lequel l'élément de fixation (17) est une vis et l'arbre (18) possède un filetage externe (20).

15. Support (1) selon au moins une des revendications précédentes, dans lequel la partie de support (5) est formée d'une paroi inférieure du support (1).
